(19) Europäisches Patentamt
European Patent Office
Office européen des brevets

(11) Veröffentlichungsnummer: **0 347 680 B1**

(12) **EUROPÄISCHE PATENTSCHRIFT**

(45) Veröffentlichungstag der Patentschrift: **02.12.92**

(51) Int. Cl.[5]: **C09B 29/085**, D06P 1/18, C08K 5/23

(21) Anmeldenummer: **89110530.6**

(22) Anmeldetag: **10.06.89**

# (54) Azofarbstoffe.

(30) Priorität: **24.06.88 DE 3821339**

(43) Veröffentlichungstag der Anmeldung:
**27.12.89 Patentblatt 89/52**

(45) Bekanntmachung des Hinweises auf die Patenterteilung:
**02.12.92 Patentblatt 92/49**

(84) Benannte Vertragsstaaten:
**CH DE FR GB LI**

(56) Entgegenhaltungen:
**GB-A- 972 956**

(73) Patentinhaber: **BAYER AG**
**W-5090 Leverkusen 1 Bayerwerk(DE)**

(72) Erfinder: **Hamprecht, Rainer, Dr.**
**Im Kerberich 25**
**W-5068 Odenthal-Blecher(DE)**
Erfinder: **Hoppe, Manfred, Dr.**
**Koelner Strasse 233**
**W-5067 Kuerten(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

## Beschreibung

Gegenstand der Erfindung sind in Wasser praktisch unlösliche, nichtionische Azofarbstoffe der Formel

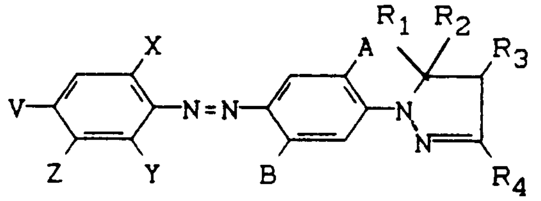

(I)

worin - unabhängig voneinander -

| | |
|---|---|
| A/B | H, Alkyl, Cl oder O-Alkyl, |
| $R_1$, $R_2$, $R_3$ | H oder Alkyl, |
| $R_4$ | Alkyl, Aryl oder COO-Alkyl, |
| $R_5$ | Alkyl oder Aryl, |
| Y | H oder CN, |
| X | $NO_2$, Cl, Br, CN oder $SO_2$-Alkyl, |
| V | $NO_2$, Cl, Br, $COOR_5$, $COR_5$, $CF_3$ oder Alkyl und |
| Z | H, Cl, Br, SCN oder CN bedeuten, |

mit der Maßgabe, daß Z = Cl, Br, SCN oder CN, wenn Y = H und wobei die im beliebigen Zusammenhang genannten Alkylreste 1-4 C-Atome aufweisen und die Arylreste vorzugsweise Phenylreste sind, die durch Cl oder $C_1$-$C_4$-Alkyl substituiert sein können.

Bevorzugt sind solche Farbstoffe der Formel I, worin

| | |
|---|---|
| A | H, $CH_3$ oder Cl, |
| B | H, $CH_3$, Cl oder O-Alkyl, |
| $R_1$ - $R_3$ | H oder Alkyl, |
| $R_4$, $R_5$ | Alkyl oder Aryl, |
| Y | CN oder H, |
| X | $NO_2$, Cl, Br, CN oder $SO_2$-Alkyl, |
| V | $NO_2$, Cl, Br, $COOR_5$ oder Alkyl und |
| Z | H, Cl, SCN oder CN bedeuten und wobei |

für Z und die Alkyl- bzw. Arylreste die obengenannten Maßgaben gelten.

Besonders bevorzugt sind solche Farbstoffe der Formel I, worin

| | |
|---|---|
| A | H oder $CH_3$, |
| B | H, $CH_3$ oder Cl, |
| $R_1$ - $R_3$ | H oder $C_1$-$C_4$-Alkyl, |
| $R_4$ | $C_1$-$C_4$-Alkyl, |
| Y | CN oder H, |
| X | $NO_2$, Cl, Br oder CN, |
| V | $NO_2$, Cl, Br oder $C_1$-$C_4$-Alkyl (vorzugsweise $CH_3$) |
| Z | H, SCN oder CN |

bedeuten, mit der Maßgabe, daß Z = SCN oder CN, wenn Y = H.

Ganz besonders bevorzugt sind einerseits Farbstoffe der Formel I, worin

| | |
|---|---|
| A | $CH_3$ oder vorzugsweise H, |
| B | H, Cl oder vorzugsweise $CH_3$, |
| $R_1$ - $R_3$ | H oder $C_1$-$C_2$-Alkyl, |
| $R_4$ | $C_1$-$C_2$-Alkyl, |
| Y | CN, |
| X | CN oder $NO_2$, |
| V | Cl, Br oder vorzugsweise $NO_2$, |
| Z | H |
| | bedeuten, |

und andererseits solche der Formel I, worin

| | |
|---|---|
| A | $CH_3$ oder vorzugsweise H, |
| B | H, Cl oder vorzugsweise $CH_3$, |
| $R_1$ - $R_3$ | H oder $C_1$-$C_2$-Alkyl, |

| | |
|---|---|
| $R_4$ | $C_1$-$C_2$-Alkyl, |
| Y | H, |
| X | CN oder vorzugsweise $NO_2$, |
| V | $NO_2$ und |
| Z | CN oder vorzugsweise SCN bedeuten. |

Die Herstellung der neuen Azofarbstoffe der Formel (I) erfolgt in an sich bekannter Weise, z.B. durch Kupplung diazotierter Aniline der Formel (II)

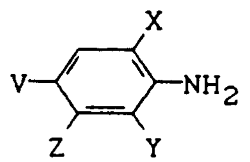

(II)

auf Kupplungskomponenten der Formel (III)

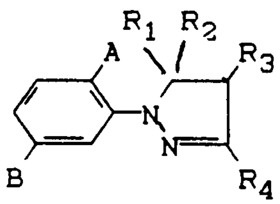

(III)

worin

A, B, $R_1$ - $R_5$, Y, X, V, Z die obengenannte Bedeutung haben.

Die Diazotierung erfolgt vorzugsweise in konzentrierter Schwefel- oder Phosphorsäure sowie in Eisessig und/oder Propionsäure.

Die Kupplungskomponenten sind bekannt bzw. nach an sich bekannten Methoden herstellbar (vgl. z.B. GB-A 972 956, Seite 3, Zeilen 28-30).

Die CN- und SCN-haltigen Farbstoffe stellt man jedoch bevorzugt dadurch her, indem man in Farbstoffen der Formel I, worin mindestens einer der Reste X, Y, Z für Cl, Br oder J steht, den Halogensubstituenten gegen einen CN- oder SCN-Rest austauscht.

Diese nukleophilen Austauschreaktionen sind ebenfalls bekannt und beispielsweise in folgender Patentliteratur beschrieben:

DE-A 1 544 563 = GB-A 1 125 683; DE-A 2 341 109 und 2 456 495, DE-A 1 809 921 und GB-A 1 255 367, GB-PS 1 226 950 und DE-A 3 300 914.

Bevorzugt ist der Halogen/Cyan-Austausch mittels Kupfer-I-cyanid, Zinkcyanid oder Gemischen dieser Cyanide in vorzugsweise polaren aprotischen Lösungsmitteln.

Die erfindungsgemäßen Azofarbstoffe können zum Färben von synthetischen Textilmaterialien, insbesondere Textilmaterialien aus sekundärem Celluloseacetat und Cellulosetriacetat, und ganz besonders aromatischem Polyester, wie z.B. Polyethylenterephthalat nach den für diese Faserarten üblichen Färbemethoden unter Verwendung wäßriger oder nicht wäßriger Flotten eingesetzt werden.

Darüber hinaus kann man die neuen Farbstoffe auch zur Spinn- und Massefärbung von Thermoplasten, z.B. Polyestern, Polystyrolen, Polycarbonaten und Polyolefinen, verwenden.

Die neuen Farbstoffe eignen sich auch für den Einsatz im textilen und nichttextilen Transferdruck.

Die erhaltenen roten bis blauen Färbungen zeichnen sich bei guten Allgemeinechtheiten und hoher Farbstärke durch einen besonders klaren Farbton aus.

Beispiel 1

Herstellung des Farbstoffs der Formel

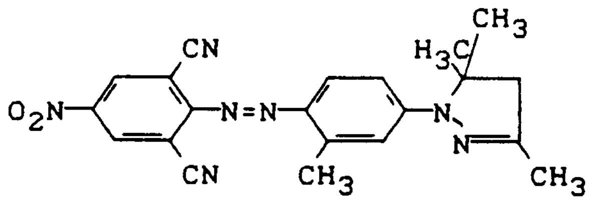

(1)

50 g 2,6-Dibrom-4-nitroanilin werden in 73 ml 93 %iger Schwefelsäure eingetragen und bei 30 ° C mit 31 ml 40 %iger Nitrosylschwefelsäure diazotiert. Man rührt 3 h nach. Die erhaltene Diazoniumsalzlösung wird auf 630 g Eis ausgetragen und der Nitritüberschuß wird vernichtet. Zu dieser Lösung werden 35,5 g 1-(m-Tolyl-)3,5,5-Tri-methylpyrazolin gegeben. Es wird 5 Stunden nachgerührt, abgesaugt und mit Wasser gewaschen.

Ausbeute an Dibromfarbstoff: 82 g.

50 g des so erhaltenen Dibromfarbstoffes werden in 120 ml Dimethylformamid suspendiert. Nach Zugabe von 5,4 g Kupfercyanid und 8,2 g Zinkcyanid wird 5 h lang auf 105 ° C erwärmt. Man fällt mit 180 ml Methanol, saugt ab, wäscht mit Methanol und Wasser und trocknet. Man erhält so 27,2 g des Farbstoffes der Formel 1; er färbt Polyesterfasern in brillanter blauer Nuance mit guten Echtheiten.

Bei analoger oder ähnlicher Fahrweise erhält man die in nachfolgender Tabelle aufgeführten Farbstoffe, die Polyester in den angegebenen Nuancen mit guten Echtheiten anfärben.

2. 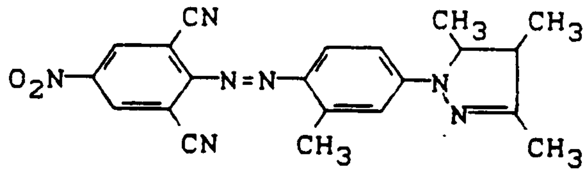 Blau

3. 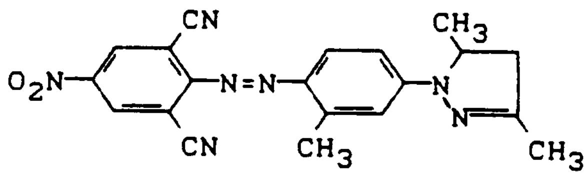 Blau

4. 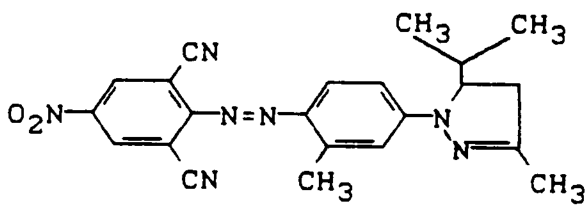 Blau

5. 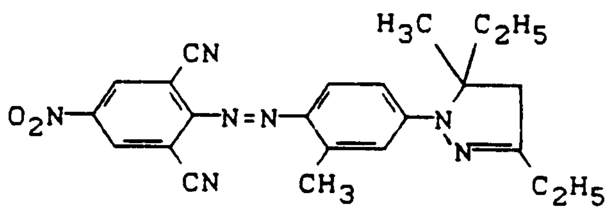 Blau

6. 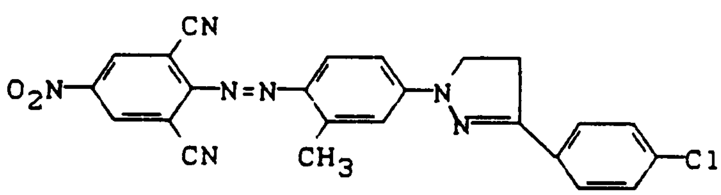 grün-stichig Blau

7. 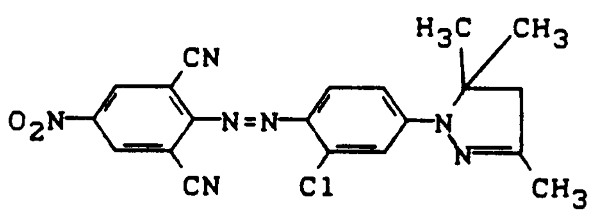 rot-stichig Blau

8. 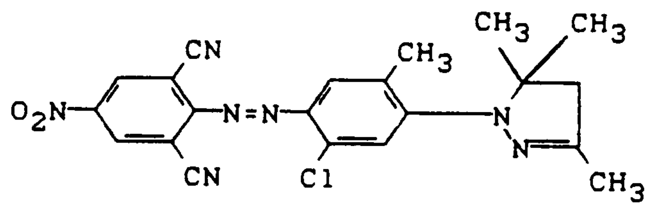 rot-stichig Blau

9. 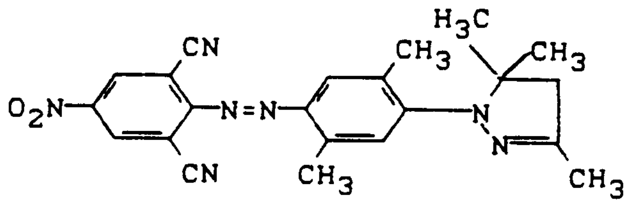 Blau

10. 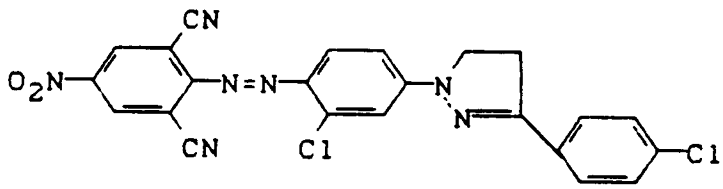 Blau

11. 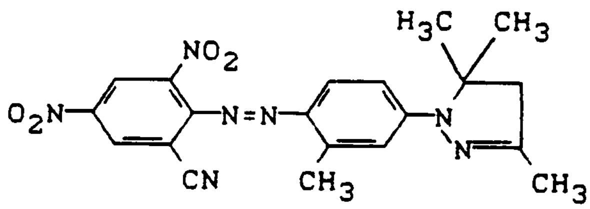 Blau

12. 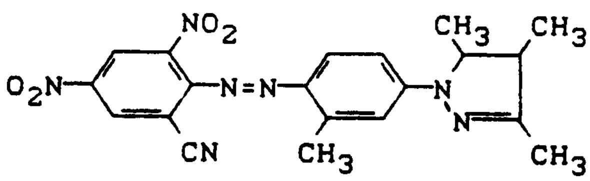 Blau

13. 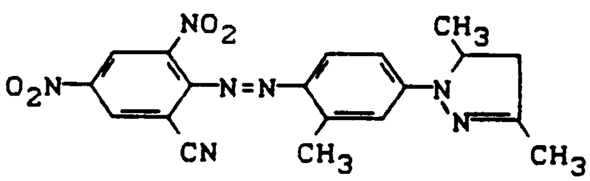 Blau

14. 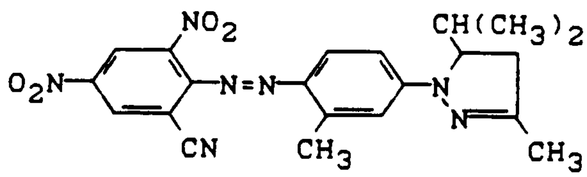 Blau

15. 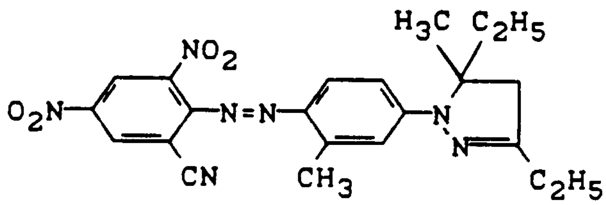 Blau

16. 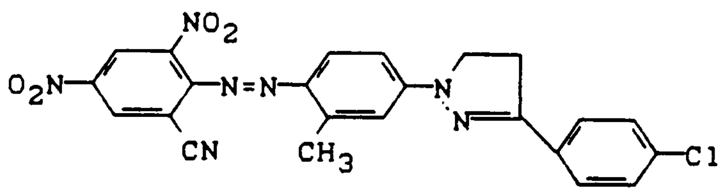 grünstichig Blau

17. 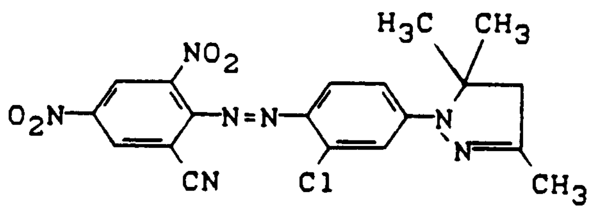 rotstichig Blau

18. 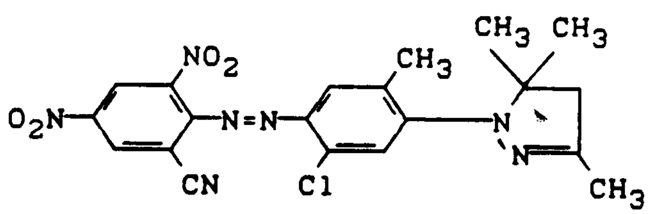 rotstichig Blau

19. 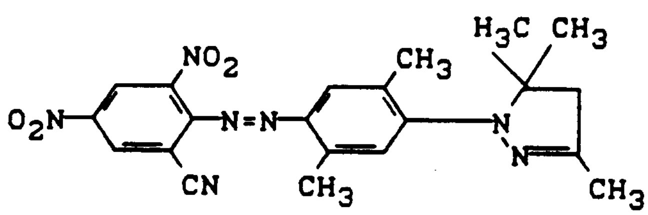 Blau

20. 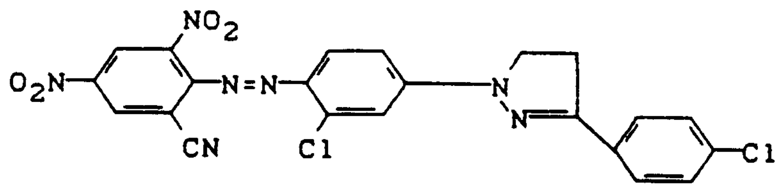 Blau

21. 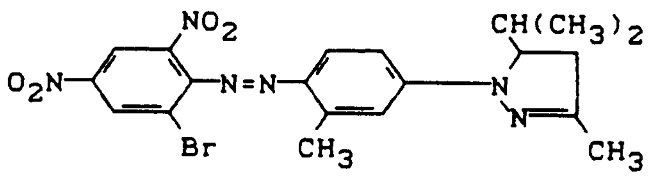 rotstichig Blau

22. 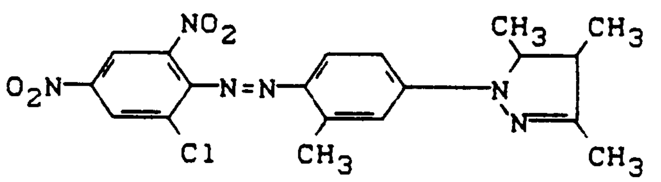 rotstichig Blau

23. 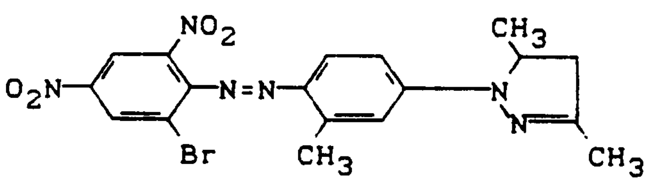 rotstichig Blau

24. 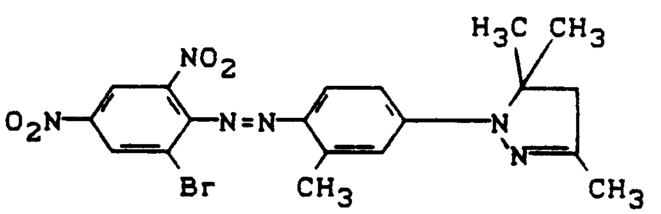 rotstichig Blau

25. 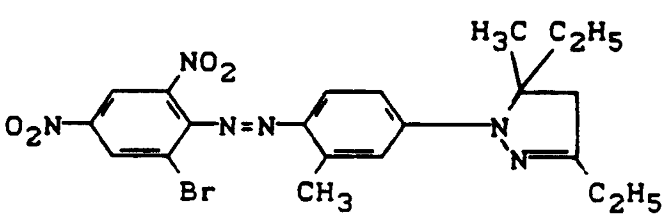 rotstichig Blau

26. 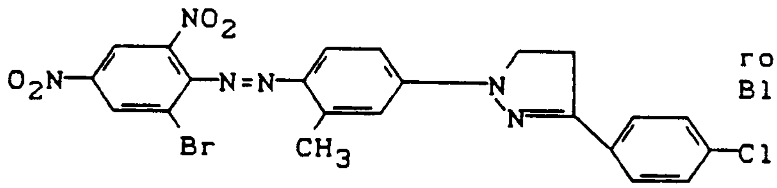 rotstichig Blau

27. 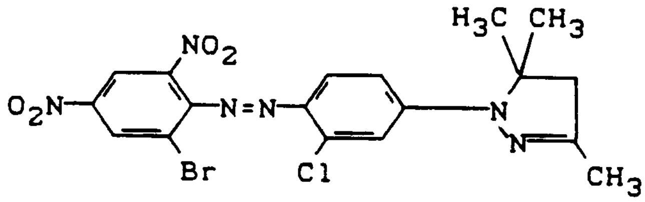 blaustichig violett

28. 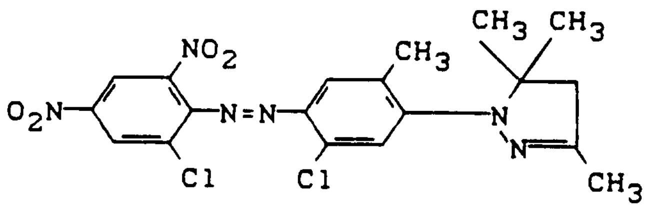 blaustichig violett

29. 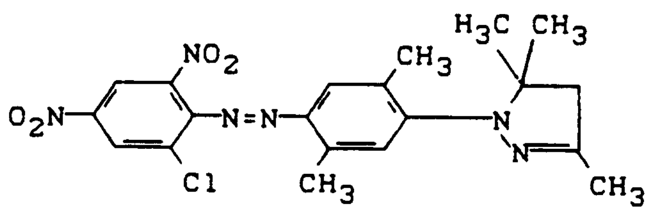 rotstichig Blau

30. 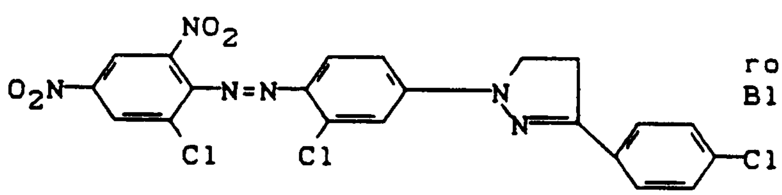 rotstichig Blau

31. 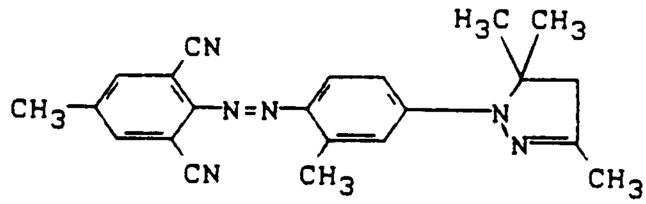 blaustichig Rot

32. 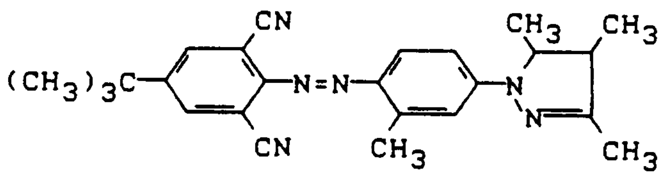 blaustichig Rot

33. 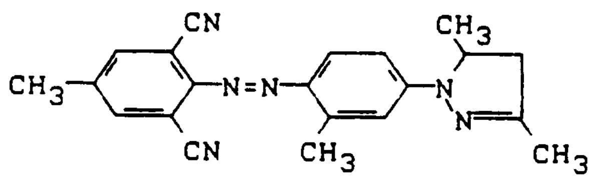 blaustichig Rot

34. 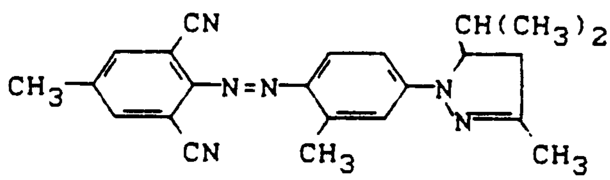 blaustichig Rot

35. 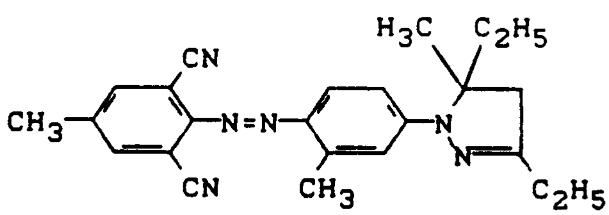 blaustichig Rot

36. 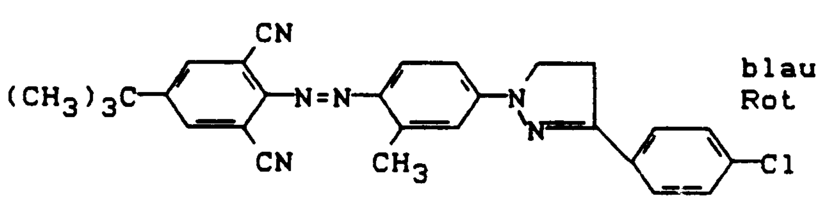 blaustichig Rot

37. 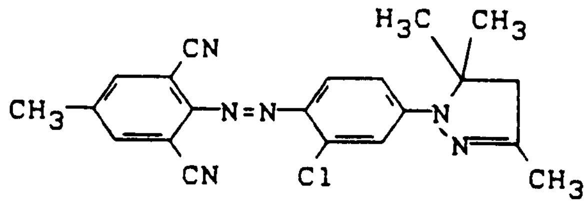 blaustichig Rot

38. 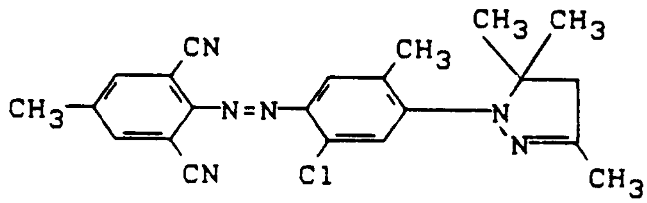 blaustichig Rot

39. 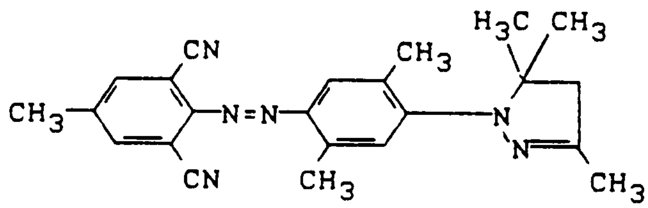 blaustichig Rot

40. 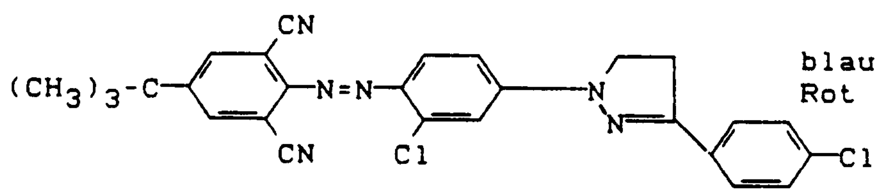 blaustichig Rot

41. 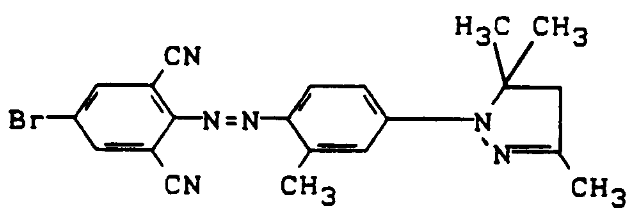 rotstichig Violett

42. 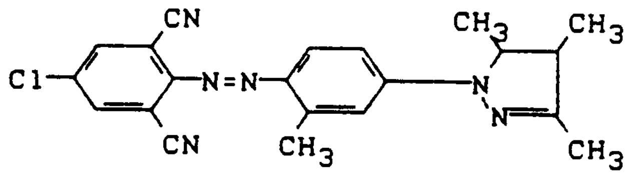 rotstichig Violett

43. 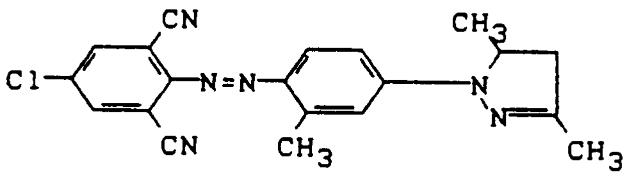 rotstichig Violett

44. 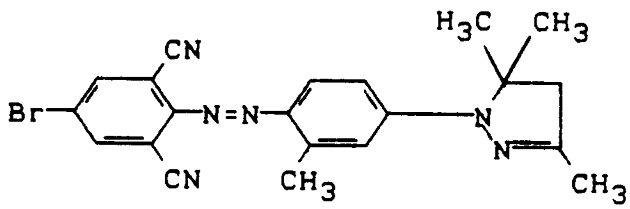 rotstichig Violett

45. 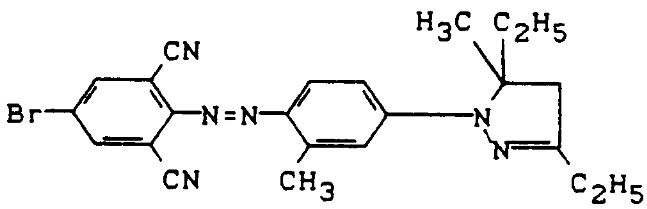 rotstichig Violett

46. 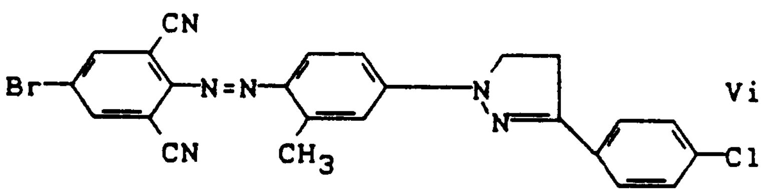 Violett

47. 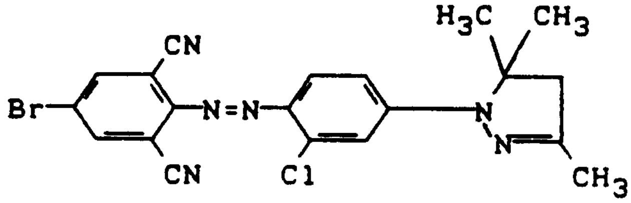 rotstichig Violett

48. 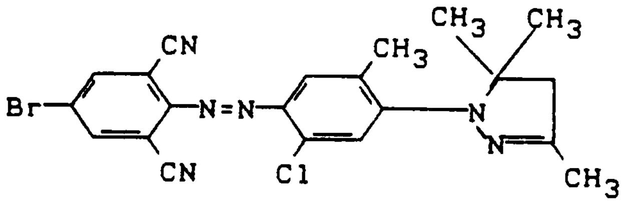 rotstichig Violett

49. 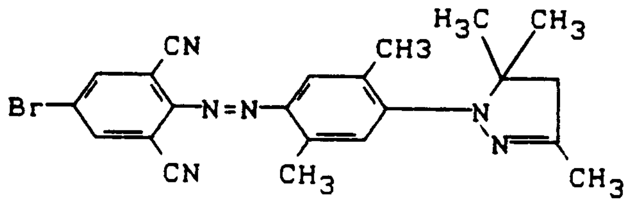 rotstichig Violett

50. 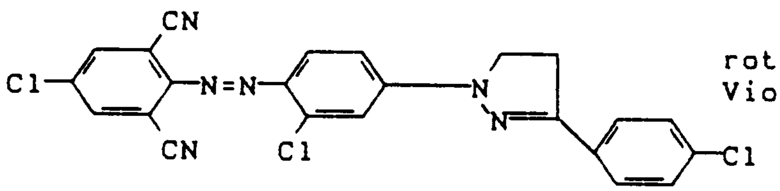 rotstichig Violett

51. 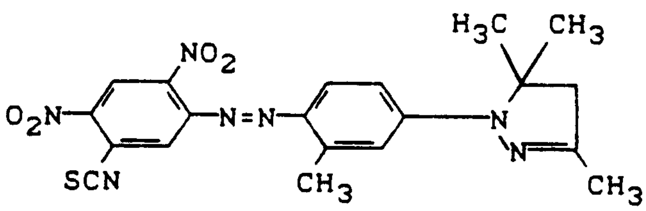 Blau

52. 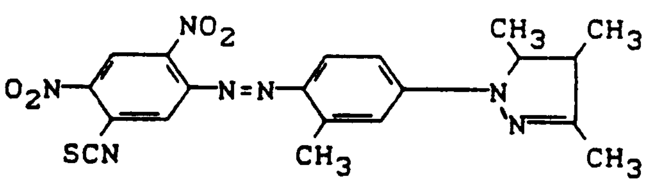 Blau

53. 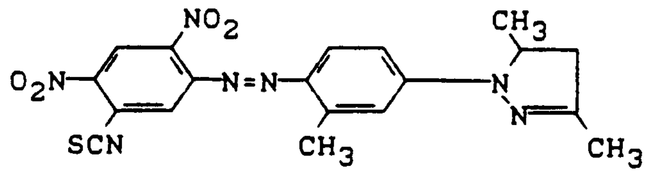 Blau

54. 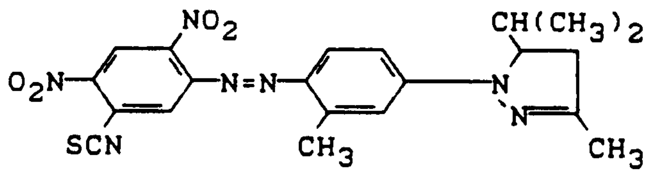 Blau

55. 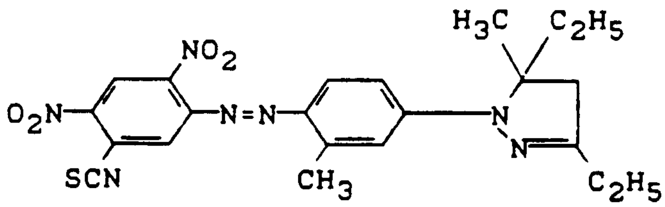 Blau

56. 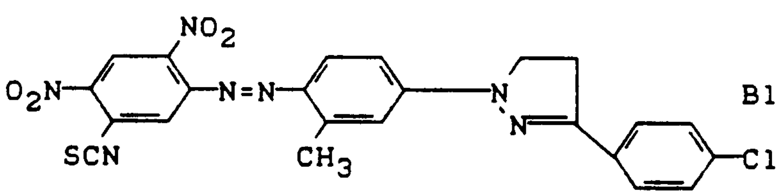 Blau

57. 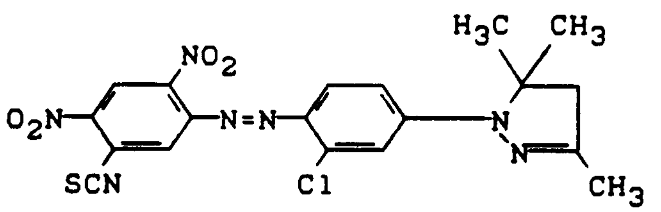 rotstichig Blau

58. 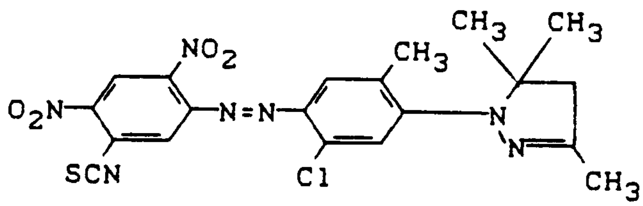 rotstichig Blau

59. 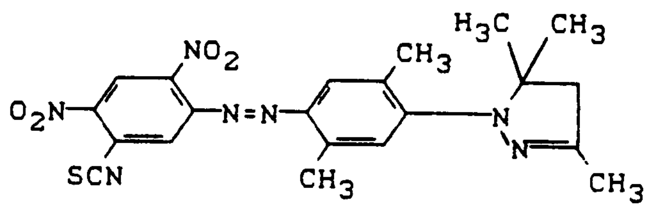 Blau

60. 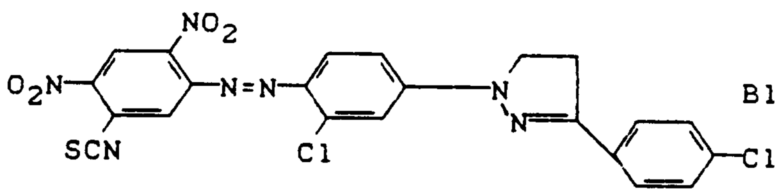 Blau

**Patentansprüche**

**1.** Azofarbstoffe der Formel

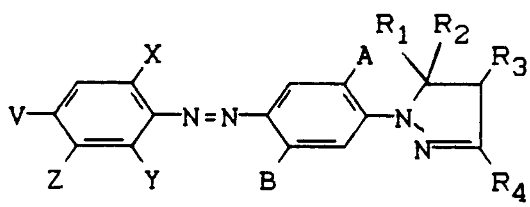

(I)

worin - unabhängig voneinander -

| | |
|---|---|
| A/B | H, Alkyl, Cl oder O-Alkyl, |
| $R_1$, $R_2$, $R_3$ | H oder Alkyl, |
| $R_4$ | Alkyl, Aryl oder COO-Alkyl, |
| $R_5$ | Alkyl oder Aryl, |
| Y | H oder CN, |
| X | $NO_2$, Cl, Br, CN oder $SO_2$-Alkyl, |
| V | $NO_2$, Cl, Br, $COOR_5$, $COR_5$, $CF_3$ oder Alkyl und |
| Z | H, Cl, Br, SCN oder CN bedeuten, |

mit der Maßgabe, daß Z = Cl, Br, SCN oder CN, wenn Y = H und wobei die im beliebigen Zusammenhang genannten Alkylreste 1-4 C-Atome aufweisen und die Arylreste vorzugsweise Phenylreste sind, die durch Cl oder $C_1$-$C_4$-Alkyl substituiert sein können.

**2.** Azofarbstoffe gemäß Anspruch 1, dadurch gekennzeichnet, daß

| | |
|---|---|
| A | H, $CH_3$ oder Cl, |
| B | H, $CH_3$, Cl oder O-Alkyl, |
| $R_1$ - $R_3$ | H oder Alkyl, |

| | |
|---|---|
| $R_4$, $R_5$ | Alkyl oder Aryl, |
| Y | CN oder H, |
| X | $NO_2$, Cl, Br, CN oder $SO_2$-Alkyl, |
| V | $NO_2$, Cl, Br, $COOR_5$ oder Alkyl und |
| Z | H, Cl, SCN oder CN bedeuten und wobei |

für Z und die Alkyl- bzw. Arylreste die in Anspruch 1 genannten Maßgaben gelten.

**3.** Azofarbstoffe gemäß Anspruch 1, dadurch gekennzeichnet, daß

| | |
|---|---|
| A | H oder $CH_3$ |
| B | H, $CH_3$ oder Cl, |
| $R_1$ - $R_3$ | H oder $C_1$-$C_4$-Alkyl, |
| $R_4$ | $C_1$-$C_4$-Alkyl, |
| Y | CN oder H, |
| X | $NO_2$, Cl, Br oder CN, |
| V | $NO_2$, Cl, Br oder $C_1$-$C_4$-Alkyl, |
| Z | H, SCN oder CN |

mit der Maßgabe, daß Z = SCN oder CN, wenn Y = H.

**4.** Azofarbstoffe gemäß Anspruch 1, dadurch gekennzeichnet, daß

| | |
|---|---|
| A | $CH_3$ oder vorzugsweise H, |
| B | H, Cl oder vorzugsweise $CH_3$, |
| $R_1$ - $R_3$ | H oder $C_1$-$C_2$-Alkyl, |
| $R_4$ | $C_1$-$C_2$-Alkyl, |
| Y | CN, |
| X | CN oder $NO_2$, |
| V | Cl, Br oder vorzugsweise $NO_2$, |
| Z | H |
| | bedeuten. |

**5.** Azofarbstoffe gemäß Anspruch 1, dadurch gekennzeichnet, daß

| | |
|---|---|
| A | $CH_3$ oder vorzugsweise H, |
| B | H, Cl oder vorzugsweise $CH_3$, |
| $R_1$ - $R_3$ | H oder $C_1$-$C_2$-Alkyl, |
| $R_4$ | $C_1$-$C_2$-Alkyl, |
| Y | H, |
| X | CN oder vorzugsweise $NO_2$, |
| V | $NO_2$ und |
| Z | CN oder vorzugsweise SCN bedeuten. |

**6.** Azofarbstoff gemäß Anspruch 1 der Formel

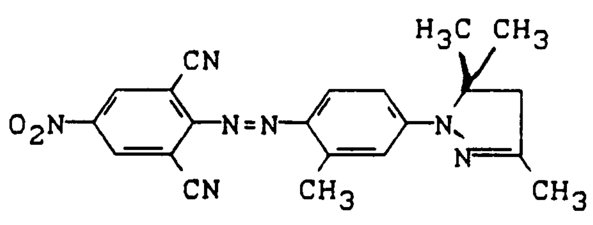

**7.** Azofarbstoff gemäß Anspruch 1 der Formel

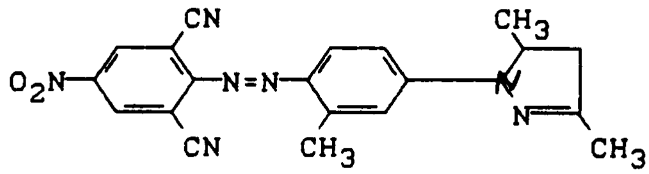

8. Verfahren zur Herstellung von Azofarbstoffen gemäß Anspruch 1, dadurch gekennzeichnet, daß man diazotierte Aniline der Formel (II)

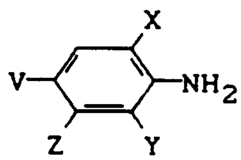

(II)

auf Kupplungskomponenten der Formel (III)

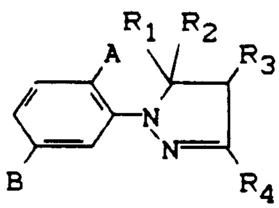

(III)

kuppelt,
wobei die genannten Reste die in Anspruch 1 angegebenen Bedeutung haben.

9. Verfahren zur Herstellung von CN- oder SCN-haltigen Azofarbstoffen gemäß Anspruch 1, dadurch gekennzeichnet, daß man in Farbstoffen der in Anspruch 1 angegebenen Formel, worin mindestens einer der Reste X, Y, Z für Cl, Br oder J steht, den Halogensubstituenten gegen CN oder SCN austauscht.

10. Verwendung der Farbstoffe gemäß Anspruch 1 in der Textilfärberei, zum Massefärben von Thermoplasten und für den Transferdruck.

**Claims**

1. Azo dyestuffs of the formula

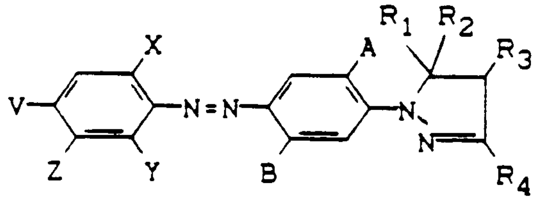

(I)

in which, independently of one another,
A/B denotes H, alkyl, Cl or O-alkyl,

$R_1$, $R_2$, $R_3$ denote H or alkyl,
$R_4$ denotes alkyl, aryl or COO-alkyl,
$R_5$ denotes alkyl or aryl,
Y denotes H or CN,
X denotes $NO_2$, Cl, Br, CN or $SO_2$-alkyl,
V denotes $NO_2$, Cl, Br, $COOR_5$, $COR_5$, $CF_3$ or alkyl and
Z denotes H, Cl, Br, SCN or CN,

with the proviso that Z is Cl, Br, SCN or CN, if Y is H, and where the alkyl radicals, in whatever context they are mentioned, have 1 to 4 C atoms and the aryl radicals are preferably phenyl radicals which can be substituted by Cl or $C_1$-$C_4$-alkyl.

**2.** Azo dyestuffs according to Claim 1, characterized in that
A denotes H, $CH_3$ or Cl,
B denotes H, $CH_3$, Cl or O-alkyl,
$R_1$-$R_3$ denote H or alkyl,
$R_4$, $R_5$ denote alkyl or aryl,
Y denotes CN or H,
X denotes $NO_2$, Cl, Br, CN or $SO_2$-alkyl,
V denotes $NO_2$, Cl, Br, $COOR_5$ or alkyl and
Z denotes H, Cl, SCN or CN and

in which the provisos mentioned in Claim 1 apply to Z and the alkyl or aryl radicals.

**3.** Azo dyestuffs according to Claim 1, characterized in that
A denotes H or $CH_3$,
B denotes H, $CH_3$ or Cl,
$R_1$-$R_3$ denote H or $C_1$-$C_4$-alkyl,
$R_4$ denotes $C_1$-$C_4$-alkyl,
Y denotes CN or H,
X denotes $NO_2$, Cl, Br or CN,
V denotes $NO_2$, Cl, Br or $C_1$-$C_4$-alkyl and
Z denotes H, SCN or CN,

with the proviso that Z is SCN or CN, if Y is H.

**4.** Azo dyestuffs according to Claim 1, characterized in that
A denotes $CH_3$ or preferably H,
B denotes H, Cl or preferably $CH_3$,
$R_1$-$R_3$ denote H or $C_1$-$C_2$-alkyl,
$R_4$ denotes $C_1$-$C_2$-alkyl,
Y denotes CN,
X denotes CN or $NO_2$,
V denotes Cl, Br or preferably $NO_2$ and
Z denotes H.

**5.** Azo dyestuffs according to Claim 1, characterized in that
A denotes $CH_3$ or preferably H,
B denotes H, Cl or preferably $CH_3$,
$R_1$-$R_3$ denote H or $C_1$-$C_2$-alkyl,
$R_4$ denotes $C_1$-$C_2$-alkyl,
Y denotes H,
X denotes CN or preferably $NO_2$,
V denotes $NO_2$ and
Z denotes CN or preferably SCN.

**6.** Azo dyestuff according to Claim 1 of the formula

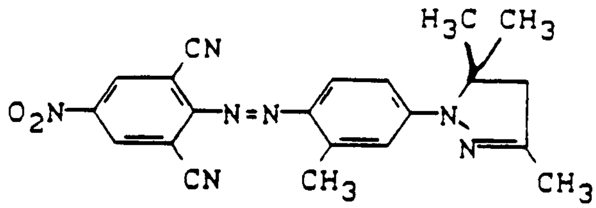

7. Azo dyestuff according to Claim 1 of the formula

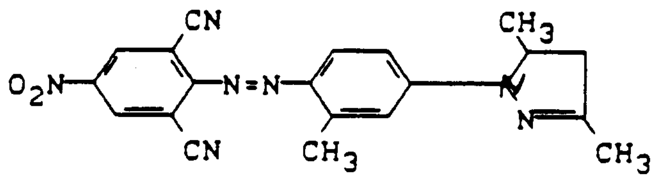

8. Process for the preparation of azo dyestuffs according to Claim 1, characterized in that diazotized anilines of the formula (II)

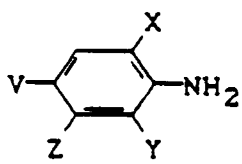

(II)

are coupled onto coupling components of the formula (III)

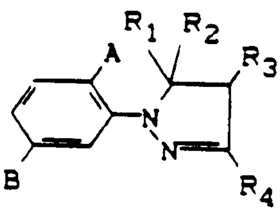

(III)

the radicals mentioned having the meaning mentioned in Claim 1.

9. Process for the preparation of CN- or SCN-containing azo dyestuffs according to Claim 1, characterized in that the halogen substituent in dyestuffs of the formula mentioned in Claim 1 in which at least one of the radicals X, Y, Z represents Cl, Br or I is exchanged for CN or SCN.

10. Use of the dyestuffs according to Claim 1 in textile dyeing, for the dyeing in the mass of thermoplastics and for transfer printing.

**Revendications**

1. Colorants azoïques de formule

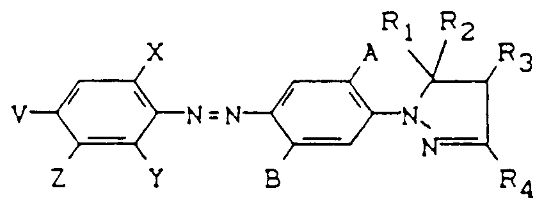

( I )

dans lesquels, indépendamment les uns des autres,

| | |
|---|---|
| A/B | représentent H, un groupe alkyle, Cl ou un groupe O-alkyle, |
| $R_1$, $R_2$, $R_3$ | représentent H ou un groupe alkyle, |
| $R_4$ | représente un groupe alkyle, aryle ou COO-alkyle, |
| $R_5$ | représente un groupe alkyle ou aryle, |
| Y | représente H ou CN, |
| X | représente $NO_2$, Cl, Br, CN ou un groupe $SO_2$-alkyle, |
| V | représente $NO_2$, Cl, Br, $COOR_5$, $COR_5$, $CF_3$ ou un groupe alkyle, et |
| Z | représente H, Cl, Br, SCN ou CN, |

à condition que Z représente Cl, Br, SCN ou CN lorsque Y représente H, et dans lesquels les restes alkyle cités dans un ordre quelconque présentent 1 à 4 atomes de carbone et les restes aryle sont de préférence des restes phényle qui peuvent être substitués par Cl ou par alkyle en $C_1$-$C_4$.

**2.** Colorants azoïques selon la revendication 1, caractérisés en ce que

| | |
|---|---|
| A | représente H, $CH_3$ ou Cl, |
| B | représente H, $CH_3$, Cl ou un groupe O-alkyle, |
| $R_1$-$R_3$ | représentent H ou un groupe alkyle, |
| $R_4$, $R_5$ | représentent un groupe alkyle ou aryle, |
| Y | représente CN ou H, |
| X | représente $NO_2$, Cl, Br, CN ou un groupe $SO_2$-alkyle, |
| V | représente $NO_2$, Cl, Br, $COOR_5$ ou un groupe alkyle et |
| Z | représente H, Cl, SCN ou CN |

et dans lesquels les conditions citées dans la revendication 1 sont valables pour Z et les restes alkyle ou aryle.

**3.** Colorants azoïques selon la revendication 1, caractérisés en ce que

| | |
|---|---|
| A | représente H ou $CH_3$, |
| B | représente H, $CH_3$ ou Cl, |
| $R_1$-$R_3$ | représentent H ou un groupe alkyle en $C_1$-$C_4$, |
| $R_4$ | représente un groupe alkyle en $C_1$-$C_4$, |
| Y | représente CN ou H, |
| X | représente $NO_2$, Cl, Br ou CN, |
| V | représente $NO_2$, Cl, Br ou un groupe alkyle en $C_1$-$C_4$, |
| Z | représente H, SCN ou CN |

à condition que Z représente SCN ou CN lorsque Y représente H.

**4.** Colorants azoïques selon la revendication 1, caractérisés en ce que

| | |
|---|---|
| A | représente $CH_3$ ou de préférence H, |
| B | représente H, Cl ou de préférence $CH_3$, |
| $R_1$-$R_3$ | représentent H ou un groupe alkyle en $C_1$-$C_2$, |
| $R_4$ | représente un groupe alkyle en $C_1$-$C_2$, |
| Y | représente CN, |
| X | représente CN ou $NO_2$, |
| V | représente Cl, Br ou de préférence $NO_2$, |
| Z | représente H. |

**5.** Colorants azoïques selon la revendication 1, caractérisés en ce que

| | |
|---|---|
| A | représente $CH_3$ ou de préférence H, |

| | |
|---|---|
| B | représente H, Cl ou de préférence $CH_3$, |
| $R_1$-$R_3$ | représentent H ou un groupe alkyle en $C_1$-$C_2$, |
| $R_4$ | représente un groupe alkyle en $C_1$-$C_2$, |
| Y | représente H, |
| X | représente CN ou de préférence $NO_2$, |
| V | représente $NO_2$ et |
| Z | représente CN ou de préférence SCN. |

**6.** Colorant azoïque selon la revendication 1, de formule

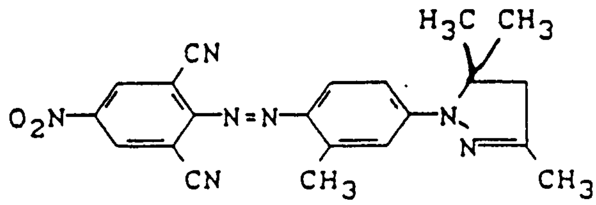

**7.** Colorant azoïque selon la revendication 1, de formule

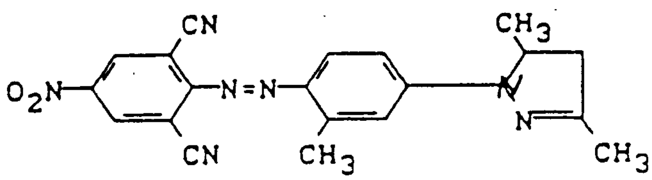

**8.** Procédé de préparation de colorants azoïques selon la revendication 1, caractérisé en ce que l'on copule des anilines diazotées de formule (II)

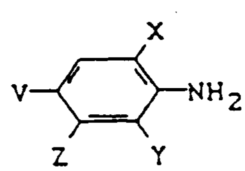

(II)

avec des composants de copulation de formule (III)

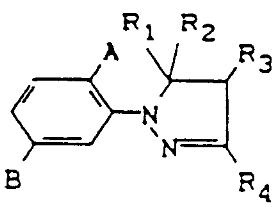

(III)

les restes cités ayant la signification indiquée dans la revendication 1.

**9.** Procédé de préparation de colorants azoïques contenant CN ou SCN selon la revendication 1, caractérisé en ce que, dans les colorants répondant à la formule indiquée dans la revendication 1, dans laquelle au moins l'un des restes X, Y, Z représente Cl, Br ou I, on remplace le substituant halogène par CN ou SCN.

**10.** Utilisation des colorants selon la revendication 1 pour la teinture des textiles, la coloration des matières thermoplastiques dans la masse et l'impression par transfert.